# EUROPEAN PATENT APPLICATION

(11) **EP 1 916 424 A2**
(43) Date of publication of application: **30.04.2008**
(21) Application number: 07119010.2
(22) Date of filing: 22.10.2007
(51) Int. Cl.: F04D 29/66

(54) **Ventilation system with sound barrier**

(30) Priority: 25.10.2006 DE 102006050339
(71) Applicant: Valeo Klimasysteme GmbH, 96476 Rodach (DE)
(72) Inventor: Stroehla, Ralph, 96450 Coburg (DE)
(74) Representative: Léveillé, Christophe

(57) **Abstract**

The invention relates to a noise-optimized ventilation system (100) which can in particular be integrated into a vehicle, with the ventilation system (100) having at least one heat exchanger (1) and a fan (2) for acting on an air guiding volume (3) with an air flow (7), wherein the air guiding volume (3) has at least one inlet (4), an outlet (5) and a sound barrier (6).

## Description

The invention relates to a reduced-noise ventilation system, as is used for example for the ventilation of a vehicle, that is to say of a vehicle interior space, for the air conditioning thereof.

The sound waves, that is to say noise generated for example by fans of heating, ventilation and air conditioning systems (HVAC systems) of motor vehicles passes via corresponding ducts with the air-conditioned air which has been set in motion into a vehicle interior space, and in doing so adversely affects the driving experience of the occupants and therefore the comfort. Primarily high-frequency noise, preferably in the range from 900 Hz to 1400 Hz, is disturbing, irritating or even detrimental to health at a corresponding volume, that is to say at a corresponding acoustic pressure level.

Already-existing solutions for noise or sound reduction which represent the prior art are briefly explained, and their characterizing features analysed, interpreted and evaluated, below.

In order to reduce or avoid the transmission of noise or sound, sound dampers are for example known which either absorb and/or reflect the noise. A well-known embodiment of such a device for reducing the intensity of sound waves is for example a silencer in a motor vehicle which reduces the exhaust gas or combustion noise of the engine within the exhaust system.

As already indicated, use is generally made of absorption noise dampers or reflection, that is to say interference noise dampers. In the case of absorption noise dampers, the strategy for reducing the intensity of the sound is that according to which porous material is provided which absorbs the sound and therefore converts said sound by means of friction into,heat. The reduction of the acoustic pressure by means of the effect of absorption is often intensified here by means of multiple reflection. Absorption permits primarily the damping of high-frequency components of a noise.

In a reflection sound damper, primarily the lower frequency components of a noise are damped by the principle of reflection. A sound damper of such a generic type contains a plurality of chambers which are traversed multiple times by a flowing medium. This results in averaging of the sound amplitude, which causes the depletion of acoustic pressure peaks.

A further possibility for damping or preventing the propagation of noise is sound control walls. Here, it is attempted to reduce the sound directly at, that is to say in the direct vicinity of, the noise source.

FR 2 780 347 describes a plastic housing for a heating and air conditioning system of a motor vehicle whose walls are provided with absorption devices or means for reducing flow noises. The air flow generated by a turbine or ventilator which is situated in a spiral, that is to say worm housing is guided here laterally to the air inlet of the housing. Situated downstream (in the direction of the flowing fluid) in the inlet region or air inlet duct of the housing are an air filter and an evaporator. The air' which flows out of the evaporator can be conducted by means of two flaps into a duct for cold, fresh air and/or a duct for warm air, with a further heat exchanger, which functions as a heater, being situated in the duct for warm air. After leaving the ducts, the air flows of the air flow which has possibly been split up by the flaps are mixed in a common chamber within the housing, specifically in such a way that a desired temperature of the air is obtained. The air is subsequently conducted downstream to its respective destination by means of corresponding flaps and ducts. Measures for reducing the noises generated or transmitted by the flowing air are realized here in that the absorption means of the housing are designed as Helmholtz resonators. Here, the Helmholtz resonators are air-filled or foam-filled chambers which are connected by means of openings to the air ducts of the housing.

The air flow and associated noise propagation is influenced here in a fluid-mechanical manner, that is to say by means of a fluid-fluid interaction and not by means of a fluid-structure interaction. As a result of the arrangement of a plurality of Helmholtz resonators on or outside the housing, the construction or the overall structure is very complex and requires additional installation space, that is to say it is not possible to obtain a compact design of the housing while correspondingly having noise reduction taking place at the same time by means of absorption. Losses occurring as a result of deflection and friction are therefore very high, which reduces efficiency.

JP 07 228128 A describes a housing having a fan, with an additional chamber, which serves as a resonance chamber or sound damper, being arranged at or in the vicinity of the fan.

US 2 225 398 A proposes a double-walled, radially running fan housing having chambers or cells, with openings being provided in the wall on the inside of the housing in the region of said cells in order to obtain a resonator action, that is to say sound absorption. Here, the cells are filled either with air or a sound-absorbing material.

JP 62 218743 A discloses a housing which is provided, via openings in flow-guiding walls which are situated downstream of the fan wheel, with Helmholtz resonators in the form of chambers. Here, the openings to the chambers are covered or provided with thin diaphragms.

EP 0 800 030 A1 describes a flap, which is composed of two flap parts, for an air guiding duct. The flap is formed from plastic material and has, at the side which is assigned to an approaching air flow, openings in order to function as a Helmholtz resonator for noise damping in the air guiding duct. In addition, the flap has, in the region of the openings, a damping layer formed from a porous material in order to increase the flow resistance and additionally dampen the sound. It is possible by means of integrated partitions within the flap to realize Helmholtz resonators for different frequencies. Here, the flap serves on the one hand for controlling the air flow and on the other hand for damping the propagating noise by means of absorption.

The abovementioned solutions for reducing the sound emission or acoustic power level have the disadvantage that they are on the one hand very voluminous, that is to say require a relatively large amount of installation space, which has a highly adverse effect for example in the case of integration into a vehicle. In addition, such correspondingly described noise damper systems have the disadvantage that they lead to undesired turbulence and therefore to an increased resistance with regard to the flowing fluid, which is noticeable for example as a pressure drop and possibly demands further noise-generating devices. In addition, corresponding systems which represent the prior art are associated with high investment and servicing costs. A further disadvantage is that noise dampers of said type for use in ventilation systems, in particular absorption noise dampers, often-also have problems with regard to odours.

Against the background of the prior art, the object of the present invention is that of specifying a ventilation system which is optimized with regard to noise while avoiding the stated disadvantages and therefore offers optimum acoustic comfort for example for a vehicle interior space of a vehicle.

Said object is achieved by means of the features of independent patent Claim 1, with expedient embodiments being described by the features of the dependent claims.

According to the invention, therefore, a noise-optimized ventilation system is provided which can advantageously be used for or integrated in vehicles, since it for example requires little installation space. Here, within the context of air conditioning for one space, the ventilation system has at least one heat exchanger, with the heat exchanger preferably being embodied as an evaporator. In addition, the ventilation system according to the invention has at least one flow machine in the form of a fan which is provided for acting on an air guiding volume. Here, the air guiding volume has at least one inlet and at least one outlet, and at least one sound barrier. In a ventilation system of said type, the fan sets air in motion, which air flows inter alia through the air guiding volume and is discharged via the outlet of the air guiding volume into the interior space of a vehicle. The noise or sound, as a propagation of pressure and density fluctuations in an elastic medium such as for example air, caused by the flow machine, that is to say the fan, is prevented here by the sound barrier from passing into a vehicle interior space, which is connected to the ventilation system or the air guiding volume, of a vehicle. Here, the sound barrier is a device or element which reduces the propagation of sound substantially by means of reflection of the sound. It is primarily possible, by means of reflection of the sound to surrounding walls of the air guiding volume which is caused by a sound barrier of such design, for the high-frequency component of the sound, for example in the range from 900 Hz to 1400 Hz, to be reduced.

It is advantageously possible in such an embodiment of the ventilation system for the sound emission level, as an acoustic power level measured in decibels, to be partially reduced by 6 dB(A) to 8 dB(A), which, when considering the overall system, with regard to the noise produced by the vehicle which can be perceived in the interior space, is noticeable in that the total sound emission level is reduced by 2 dB(A).

The sound barrier is preferably connected at least to one wall face of the air guiding volume. It is thereby possible, primarily with regard to the flowing medium, that is to say the air, to obtain favourable flow conditions, and there are no air quantity losses. Here, flow advantageously passes around the sound barrier, and therefore separates the flow cross section of the air guiding volume into at least two cross sections or regions.

The sound barrier is advantageously arranged substantially perpendicular to the flow direction of the medium which is set in motion by the flow machine or the fan. It is thereby possible to obtain a high efficiency of the sound barrier with regard to the sound reduction without having to accept large flow losses.

The sound barrier is preferably embodied as a beam structure. A beam structure is simple to produce and can be quickly integrated into a corresponding air guiding volume. Edges around which the medium which is set in motion by the fan flows are advantageously rounded off, such that turbulence vortices in the air flow can be reduced or entirely eliminated. Vortices of said type would increase the resistance to the following flow of the flowing medium, and this would lead to a pressure drop or to a reduced air quantity throughput.

The heat exchanger is advantageously situated between the fan and the sound barrier. As a result of an arrangement of said type, in which the heat exchanger is arranged, with respect to the medium which is set in motion by the fan, downstream in the direction of the flowing medium between the fan and the sound barrier, a ventilation system of such design according to the invention can be installed for example into a vehicle and can be serviced quickly, easily and with the smallest possible installation space requirements. It would of course also be conceivable to integrate the heat exchanger upstream of the fan, in the opposite direction to the flow direction of the flowing medium, that is to say in the suction region of the fan.

The spacing between the heat exchanger and the sound barrier is preferably in the range from 2 mm to 150 mm, in particular preferably in the range from 10 mm to 80 mm. An advantage which results from this is that the relatively large flow cross section behind, that is to say downstream of a heat exchanger can be correspondingly utilized, and inhomogeneous flow conditions in the heat exchanger can be avoided.

The flow cross section, which is reduced by the integration of the sound barrier, of the air guiding volume is always greater than or equal to the remaining flow cross section, which is situated downstream of the sound barrier, of the air guiding volume. This gives a favourable boundary condition for the flow of the medium for ventilation, which therefore has little influence within the context of a resistance on the air flow which is generated by the fan, and would therefore result in air quantity losses.

The flow cross section in the air guiding volume is preferably abruptly reduced in size downstream of the heat exchanger, that is to say towards the outlet of the air guiding volume. This results in the advantage that it is possible to cope primarily'with limited or predefined installation space, which is given for example in motor vehicles.

The cross section of the inlet of the air guiding volume is preferably greater than or equal to the cross section of the outlet. In this way, it is additionally possible to obtain a further noise reduction primarily by means of reflection.

The air guiding volume and/or the sound barrier are preferably formed from plastic, preferably from polypropylene (PP) or polyamide (PA). This results in the advantages of for example a simple and cost-effective production process, for example by means of injection moulding, and a considerably reduced weight.

The air guiding volume and the sound barrier are preferably produced in an integral construction. In this way, primarily a simple production process and simple assembly can be realized.

At least a part of the air guiding volume and at least a part of the at least one sound barrier are preferably formed in an integral construction, preferably by means of an injection moulding process. For example, in each case one part of the sound barrier could be integrally formed with in each case one component of the housing or air guiding volume, as a result of which the sound barrier is formed as the housing parts are joined together, in particular as a closed structure. Advantages are given here primarily in production and assembly.

The cross section which is exposed to flow, that is to say the cross-sectional area, which is exposed to flow, of the sound barrier is advantageously in a range from 10% to 30% of the cross section of the heat exchanger or evaporator. The cross-sectional area, which is exposed to flow, of the sound barrier is particularly advantageously 17% of the cross-sectional area of the heat exchanger.

The disclosed features of the ventilation system according to the invention can of course be varied within the scope of the claims and combined with one another in any desired manner in order to obtain further advantages and properties.

The invention therefore relates to a ventilation system which is characterized primarily by the advantages of the sound barrier which is integrated into the air guiding volume.

Further properties and advantages of the invention can be gathered from the following description of embodiments of the invention, with reference to the appended figures, which embodiments are however to be understood merely as exemplary and in no way restrictive.

In the figures:
- Figure 1: shows a cross section through an exemplary embodiment of a ventilation system 100 according to the invention;
- Figure 2: is a graphic illustration of the flow cross-sectional profile or the flow cross-sectional profiles in the air guiding volume 3 of the exemplary embodiment of a ventilation system 100 according to the invention shown in figure 2;
- Figure 3: shows a detail of an exemplary embodiment of a ventilation system 100 according to the invention in a motor vehicle in a perspective, three-dimensional illustration.

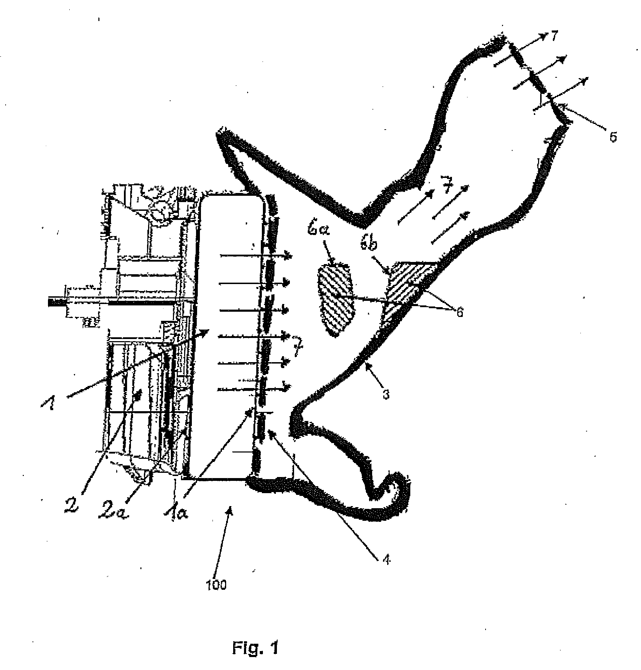

Figure 1 shows a cross section through an exemplary embodiment of a ventilation system 100 according to the invention with components which are illustrated in a partially simplified manner and which will be explained in more detail below. The ventilation system 100 according to the invention is, in the exemplary embodiment shown, integrated or installed in a motor vehicle (not illustrated in figure 1) and serves for the ventilation or air conditioning of the vehicle interior space (not illustrated in figure 1).

Accordingly, figure 1 illustrates a heat exchanger device which functions as an evaporator 1. Air 7 which flows or moves through the evaporator 1 or the plates of the evaporator is correspondingly cooled because a refrigerant in the evaporator 1 requires heat energy in order to be able to evaporate. Said heat energy is therefore extracted from the air 7 via the surface of the evaporator 1.

Also shown is the housing of a' fan 2 which is situated in the direct vicinity, that is to say at a side of the evaporator 1 and is provided for setting air 7 in motion. Here, the fan 2 is designed as a radial ventilator. Here, the air 7 is sucked in by the fan 2. After the air 7 passes out of the fan 2 on that side 2a of the fan 2 which faces towards the evaporator 1, the evaporator 1 is therefore acted on or traversed by the air 7, with the air 7 which is provided for the air conditioning being cooled as it passes through the evaporator 1, as already described.

In addition, in the exemplary embodiment of a ventilation system 100 according to the invention which is shown, an air guiding volume 3 is arranged or connected at the opposite side 1a of the evaporator 1. from the fan 2. The air guiding volume 3 has, in the exemplary embodiment of a ventilation system 100 according to the invention which is shown, an inlet 4 which is connected or joined to the opposite side 1a of the evaporator 1 from the fan 2. In addition, in the exemplary embodiment shown, the air guiding volume 3 has an outlet 5 which is connected to the vehicle interior space, which is to be ventilated or air-conditioned, of the vehicle (not illustrated in figure 1). Here, the air guiding volume 3 is advantageously formed from plastic, such as for example polypropylene (PP). Also conceivable would be a design of the air guiding volume 3 made from polyamide (PA).

As can be seen from figure 1, the air guiding volume 3 is acted on with air 7 by the fan 2 via the evaporator 1, that is to say the air 7 which emerges from the evaporator 1 passes via the inlet 4 of the air guiding volume 3 into the air guiding volume 3 and flows through the air guiding volume 3 to the outlet 5 of the air guiding volume 3 into the connected vehicle interior space (not illustrated in figure 1), which has already been discussed, in order to correspondingly ventilate or provide air conditioning in said vehicle interior space.

As can be seen from figure 1, the embodiment of a ventilation system 100 according to the invention which is shown advantageously has two sound barriers 6 (6a, 6b) which are situated in the air guiding volume 3 between the inlet 4 of the air guiding volume 3 and the outlet 5 of the air guiding volume 3. Here, the sound barriers 6. are designed substantially as beam structures, that is to say as transverse beams, and are arranged substantially perpendicularly with respect to the flow direction of the flowing air 7. Like the air guiding volume 3, a design of the sound barriers 6a, 6b from plastic is advantageous since for example weight can be saved. In the exemplary embodiment of a ventilation system 100 according to the invention which is shown, the sound barriers 6a, 6b preferably have, in cross section, rounded edges around or over which the air 7 flows. As a result of such a design of the sound barriers 6a, 6b with rounded edges, for example vortex formation in the flowing air 7 is avoided or prevented, which would lead to an increase in the resistance to the flow of the air 7, a pressure drop downstream, that is to say in the direction of the flowing air 7, and therefore to a reduced efficiency of the ventilation system.

In contrast to the sound barrier 6b, the sound barrier 6a is arranged in a free-lying or free-standing manner. In other words, the air 7 which is set in motion flows completely around the surfaces of the sound barrier 6a with the exception of the connecting regions of the sound barrier 6a to the inner wall of the air guiding volume 3, while the sound barrier 6b is on one side situated on or connected to the wall face of the air guiding volume 3.

The main noise source in the ventilation system 100 is the fan 2. The sound waves generated by the fan 2, as small pressure and density fluctuations in an elastic medium, propagate longitudinally and/or transversely with the air 7 which is set in motion by the fan 2 and would, in passing through the evaporator 1, pass with the air 7 via the air guiding volume 3 which is connected to the evaporator 1 into the vehicle interior space (not illustrated in figure 1) and therefore restrict the desired comfort, or have a disturbing and irritating effect for the occupants of the vehicle interior space.

However, the integration of the sound barriers 6a, 6b in the exemplary embodiment of a ventilation system 100 according to the invention which is shown in figure 1 prevents or reduces the noise propagation, so as to give a noise-optimized ventilation system 100 having the already-stated and highlighted advantages.

By means of sound barriers 6a, 6b which are arranged and designed in such a way, the propagation of the sound with the high-frequency components, for example in the range from 900 Hz to 1400 Hz, is suppressed or prevented primarily by means of reflection effects of the sound barriers 6a, 6b with the inner walls, that is to say the wall faces of the air guiding volume 3. There is an associated advantageous partial reduction of the sound emission level in said frequency range by 6 dB(A) to 8 dB(A).

Here, the sound barriers 6a, 6b are advantageously to be arranged in the region of a cross-sectional step of the flow cross section which is provided by the air guiding volume 3. There are therefore no losses in the quantity of the flowing air 7 in said region, and there is no risk of vortex formation or an associated deterioration in the operation of the ventilation system 100 according to the invention.

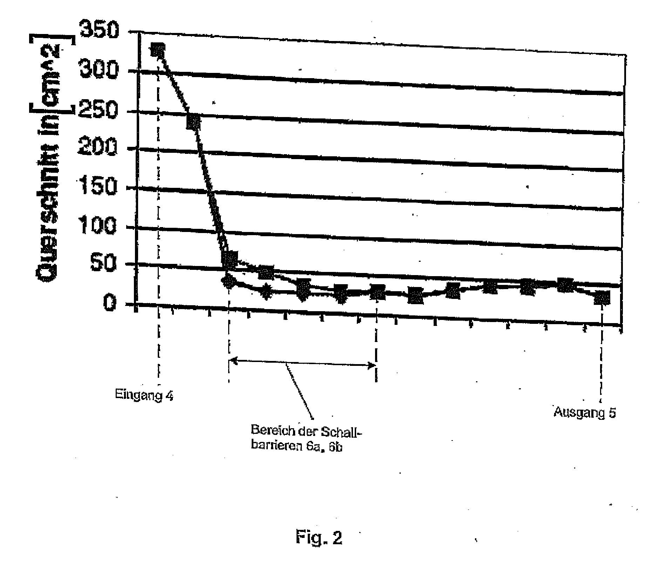

Figure 2 shows, in a graphic illustration, a flow cross-sectional profile or flow cross-sectional profiles in the air guiding volume 3 for the air 7 which flows through the air guiding volume 3, which air 7 enters at the inlet 4, flows along the air guiding volume 3 and exits at the outlet 5. Here, the air guiding volume 3 or the flow cross section which is provided by the air guiding volume 3 corresponds to the air guiding volume 3 shown in figure 1 with the integrated sound barriers 6a and 6b of the exemplary embodiment of a ventilation system 100 according to the invention.

It can be clearly seen that the cross section at the inlet 4 of the air guiding volume 3 is significantly larger than the cross section at the outlet 5 of' the air guiding volume 3. In addition, for the region in which the sound barriers 6a and 6b are situated in the air guiding volume 3, there is a division, which takes place correspondingly in sections, of the flow of the air 7 which is set in motion by the fan 2, and therefore of the flow cross section of the air guiding volume 3. The cause of this is the already-described position of the sound barrier 6a in the air guiding volume 3 of the exemplary embodiment of a ventilation system 100 according to the invention which is shown in figure 1. In the further profile downstream, that is to say in the direction of the flowing air 7, however, the flow of the air 7 which is divided into two flows by the sound barrier 6a is merged again in the air guiding volume 3. Consequently, there is also an associated return from two flow cross sections to a single flow cross section in the air guiding volume 3 downstream of the sound barrier 6a.

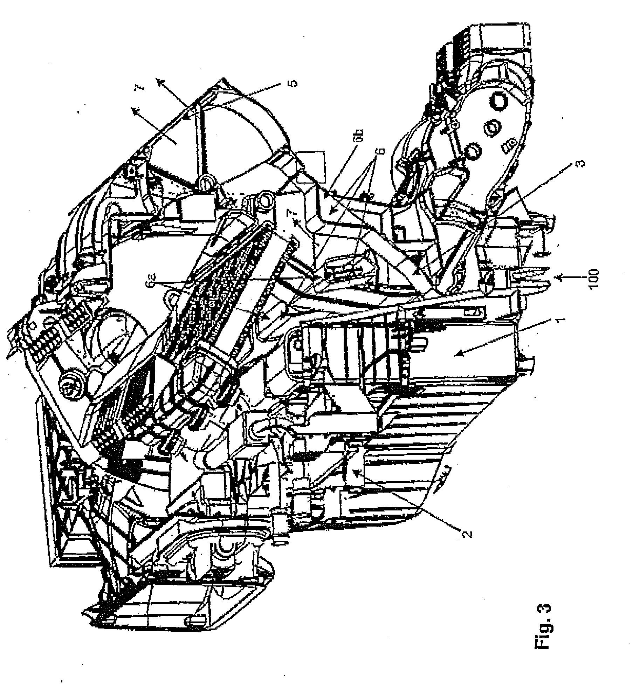

Figure 3 shows a detail of an exemplary embodiment of a ventilation system 100 according to the invention, which is integrated within an air-conditioning system region of a motor vehicle, in a perspective, three-dimensional illustration. A fan 2, of which the housing 2 can be seen, serves for acting on the air guiding volume 3, or the heat exchanger 1 which functions as an evaporator 1, in order to heat and/or cool the air 7.

In an installation of said type, the fan 2 is preferably capable of sucking in external air and/or recirculated air from the vehicle interior space and feeding or accelerating the air flow 7 with a pressure loading. After leaving the fan 2, the air 7 which is set in motion passes through the evaporator 1 and passes, having been correspondingly heated or cooled, via the inlet 4 (not illustrated in figure 3)' into the inlet region of the air guiding volume 3 which is connected to the evaporator 1 downstream. The sound-reducing means, that is to say sound barriers 6 in the form of closed beams, are preferably situated in the air guiding volume 3 in the direct vicinity of the evaporator 2. As shown in figure 3, in the exemplary embodiment of the ventilation system 100 according to the invention, the sound barrier 6a does not extend over the entire width of the air guiding volume 3 but rather advantageously projects, in an arrangement lying transversely with respect to the evaporator 2 or the flowing air 7 which emerges from the evaporator, up to a certain region into the flow cross section of the air guiding volume 3. In the exemplary embodiment of a ventilation system 100 according to the invention which is shown, a further sound barrier 6b is provided within the air guiding volume 3. Said further sound barrier 6b is situated, in a flow-promoting and sound-reduction-promoting position, downstream of the sound barrier 6a, with one side of the sound barrier 6b bearing against one of the side walls of the air guiding volume 3. The noises which are transported with the moving air 7 are correspondingly reflected on the sound barriers 6a and 6b, such that there is a reduced sound emission. The air 7 which is set in motion by the fan 2 therefore passes via the outlet 5 of the air guiding volume 3 with a considerably reduced acoustic amplitude into the passenger compartment and leads to optimum noise comfort.

In summary, it is to be stated that the invention is based on providing a ventilation system which is optimized with regard to noise generation and which, by means of the integration of at least one sound barrier into the air guiding volume, primarily prevents the emergence of high-frequency sound out of the ventilation system.

## Claims

1. Ventilation system (100), in particular for a vehicle, having at least one heat exchanger (1) and at least one fan (2) for acting on an air guiding volume (3), with the air guiding volume (3) having at least one inlet (4), an outlet (5) and a sound barrier (6), wherein the sound barrier (6) is an element which reduces the propagation of sound substantially by means of reflection.

2. Ventilation system (100) according to one of the preceding claims, wherein the sound barrier (6) is connected at least to one wall face of the air guiding volume (3).

3. Ventilation system (100) according to one of the preceding claims, wherein the sound barrier (6) is arranged substantially perpendicular to the flow direction of the medium (7) which is set in motion by the fan (2).

4. ventilation system (100) according to one of the preceding claims, wherein the sound barrier (6) is embodied as a beam structure.

5. Ventilation system (100) according to one of the preceding claims, wherein the heat exchanger (1) is situated between the fan (2) and the sound barrier (6).

6. Ventilation system (100) according to one of the preceding claims, wherein the spacing between the heat exchanger (1) and the sound barrier (6) is in the range from 2 mm to 150 mm, preferably in the range from 10 mm to 80 mm.

7. Ventilation system (100) according to one of the preceding claims, wherein the cross section, which is exposed to flow, of the sound barrier (6) is in the range from 10% to 30% of the cross section of the heat exchanger (1), preferably 17% of the cross-sectional area of the heat exchanger (1).

8. Ventilation system (100) according to one of the preceding claims, wherein the flow cross section (8), which is reduced by the integration of the sound barrier (6), of the air guiding volume (3) is always greater than or equal to the remaining flow cross section (9), which is situated downstream of the sound barrier (6), of the air guiding volume (3).

9. Ventilation system (100) according to one of the preceding claims, wherein the flow cross section in the air guiding volume (3) is abruptly reduced in size downstream of the heat exchanger (1).

10. Ventilation system (100) according to one of the preceding claims, wherein the cross section of the inlet (4) is greater than or equal to the cross section of the outlet (5).

11. Ventilation system (100) according to one of the preceding claims, wherein the air guiding volume (3) and/or the sound barrier (6) are formed from plastic, preferably polypropylene (PP) or polyamide (PA).

12. Ventilation system (100) according to one of the preceding claims, wherein the air guiding volume (3) and the sound barrier (6) are produced in an integral construction.

13. Ventilation system (100) according to one of Claims 1 to 12, wherein at least a part of the air guiding volume (3) is formed in an integral construction, preferably by means of in injection-moulding process, with at least a part of at least one sound barrier (6).
